# FASCICULE DE BREVET EUROPEEN

(11) **EP 1 218 292 B1**
(45) Date de publication et mention de la délivrance du brevet: **26.03.2003**
(21) Numéro de dépôt: 00965661.2
(22) Date de dépôt: 05.10.2000
(51) Int. Cl.: C01F 11/02

(54) **PRODUIT A BASE D'OXYDE DE CALCIUM ET SON PROCEDE DE FABRICATION**
PRODUKT AUF BASIS VON KALZIUMKARBONAT UND VERFAHREN ZU DESSEN HERSTELLUNG
CALCIUM OXIDE PRODUCT AND METHOD FOR MAKING SAME

(30) Priorité: 08.10.1999 BE 9900667
(43) Date de publication de la demande: 03.07.2002
(73) Titulaire: S.A. LHOIST RECHERCHE ET DEVELOPPEMENT, 1342 Ottignies-Louvain-La-Neuve (BE)
(72) Inventeur: LAUDET, Alain, B-5000 Namur (BE); GUEGUEN, Erwan, B-1495 Villers-la-Ville (BE)
(74) Mandataire: Claeys, Pierre
(86) Numéro de dépôt international: BE0000116
(87) Numéro de publication internationale: WO01027031

(56) Documents cités:
- EP-A- 0 104 719
- GB-A- 2 030 552
- CHEMICAL ABSTRACTS, vol. 100, no. 8, 20 février 1984 (1984-02-20) Columbus, Ohio, US; abstract no. 55375, ADACHI SEKKAI KOGYO K. K., JAPAN: "Surface treatment of calcium oxide powder" XP002139510 cité dans la demande & JP 58 180225 A (ADACHI SEKKAI KOGYO K. K., JAPAN) 21 octobre 1983 (1983-10-21)
- CHEMICAL ABSTRACTS, vol. 95, no. 16, 19 octobre 1981 (1981-10-19) Columbus, Ohio, US; abstract no. 135159, SONODA, HIRAKU, JAPAN ET AL: "Prevention of calcium oxide powder aggregation" XP002139511 cité dans la demande & JP 56 050115 A (SONODA, HIRAKU, JAPAN;MORIMOTO, MASAYUKI) 7 mai 1981 (1981-05-07)
- DATABASE WPI Section Ch, Week 198701 Derwent Publications Ltd., London, GB; Class L02, AN 1987-002532 XP002139702 & JP 61 261242 A (OHE KAGAKU KOGYO KK), 19 novembre 1986 (1986-11-19) cité dans la demande
- DATABASE WPI Week 198528 Derwent Publications Ltd., London, GB; AN 167829 XP002139512 & JP 60 096561 A (MITSUO SOGO KENKYUSHO), 30 mai 1985 (1985-05-30)

## Description

La présente invention est relative à un produit à base d'oxyde de calcium sous forme de grains grossiers et à un procédé de fabrication d'un tel produit.

Dans la présente invention, par produit à base d'oxyde de calcium, il faut entendre non seulement de la chaux vive CaO, mais aussi de la dolomie vive CaO.MgO, et tous les intermédiaires xCaO.(1-x)MgO, où x est égal ou inférieur à 1 mais supérieur à 0.

Ces produits à base d'oxyde de calcium sous forme de grains grossiers se présentent sous la forme de grains dont la taille est supérieure à 10 mm, et est de préférence comprise entre 10 et 70 mm.

La présente invention n'est donc pas relative au traitement de chaux en poudre ou à grains fins, comme prévu par exemple dans JP-58180225, JP-56050115 et JP-61261242.

On peut obtenir des produits à base de tels grains grossiers par cuisson d'une matière première, telle que par exemple du calcaire, puis criblage du produit obtenu appelé chaux en roche. Par chaux en roche suivant l'invention il faut entendre non seulement celle-ci, mais aussi la dolomie en roche, et les intermédiaires tels que la chaux dolomitique en roche. On peut aussi obtenir des produits à base d'oxyde de calcium sous forme de grains grossiers au sens de l'invention par compactage de particules fines de chaux vive, de dolomie vive ou des intermédiaires précités, et formation de cette manière de petites briquettes ou comprimés ayant la taille indiquée ci-dessus.

La chaux en roche génère des fines aux différentes étapes de sa manutention, depuis son défournement à la fin de la cuisson de la matière première jusqu'à sa mise en oeuvre chez l'utilisateur, par exemple comme ajout dans des convertisseurs de sidérurgie. Les fines sont produites par fragmentation des grains de chaux, au cours de leur chute lors du chargement ou du déchargement d'un camion ou d'un silo, ou par attrition lors de la friction entre les grains de chaux au cours du transport par camion ou sur des bandes transporteuses.

De même les briquettes précitées à base d'oxyde de calcium se refragmentent au cours de leur manutention et reforment plus ou moins rapidement une nouvelle fraction de fines.

Par fines, au sens de l'invention, il faut entendre toute particule dont la taille est inférieure à la taille nominale du produit utilisé. Par exemple, si l'utilisateur souhaite un produit ayant une granulométrie de 10 à 70 mm, les fines seront formées de particules de taille inférieure à 10 mm. Dans un cas de ce genre, la proportion de fines (0-10 mm) représente ± 3 % de la masse de chaux en roche, à la sortie du four. Elle peut atteindre 8 à 10 % après déchargement chez l'utilisateur. S'il s'agit par exemple d'un sidérurgiste, la proportion de fines peut atteindre 15 à 25 % lors de l'injection dans le convertisseur. L'envol de ces fines pendant le transport et la manutention de la chaux représente non seulement une perte économique considérable, mais constitue également une source de pollution non négligeable, dont le traitement est de plus en plus coûteux.

On peut évidemment réduire l'émission des fines par des opérations de criblage et une amélioration des infrastructures, afin de réduire la hauteur des chutes.

La présente invention a pour but de mettre au point un produit à base d'oxyde de calcium sous forme de grains grossiers, qui présente une résistance mécanique améliorée et par conséquent une réduction de l'attrition du matériau et de sa fragmentation par les chocs et donc une réduction de l'émission de poussières lors de sa manutention. Elle a également pour but la réalisation d'un procédé de fabrication d'un produit à base d'oxyde de calcium sous forme de grains grossiers qui permette d'améliorer ladite résistance mécanique du produit. Avantageusement, le produit suivant l'invention doit pouvoir se présenter sous une forme imperméable à l'humidité pour améliorer ses propriétés de stockage.

On a résolu ces problèmes, suivant l'invention, par un produit à base d'oxyde de calcium sous forme de grains grossiers qui comporte un film protecteur enrobant les grains, à base d'au moins un composé filmogène, qui est solide à la température ambiante et qui, lors de l'application sur les grains, est en solution ou émulsion dans une phase aqueuse évaporable.

La présente invention consiste donc à intervenir au niveau du matériau par enrobage des grains par un film protecteur qui va réduire les phénomènes d'attrition et de fragmentation des grains, ce film se solidifiant lorsque la phase aqueuse s'évapore.

Suivant une forme de réalisation avantageuse de l'invention, ladite phase aqueuse est de l'eau et le produit comporte en outre, en surface des grains, une mince couche de chaux hydratée qui est enrobée par ledit film protecteur durci.

Une réaction d'hydratation de CaO en Ca(OH)₂ se produit à la surface des grains à base d'oxyde de calcium lors de l'application de la solution ou émulsion aqueuse du composé filmogène. Cette réaction est suffisamment exothermique pour élever localement la température, jusqu'à une centaine de degrés Celsius, et évaporer quasi instantanément l'eau qui n'a pas encore réagi, ce qui permet un durcissement très rapide du film protecteur superficiel. La rapidité de l'enrobage est favorable dans un procédé industriel car elle réduit le temps d'obtention d'un produit aisément manutentionnable. De plus, l'eau en s'évaporant n'émet pas de vapeurs nocives, inflammables ou capables d'exploser et elle représente de ce fait une phase liquide tout à fait préférentielle. Il faut par ailleurs remarquer que, par mince couche de chaux hydratée, il faut entendre suivant l'invention non seulement une couche de chaux hydratée pure, mais aussi de chaux hydratée contenant partiellement de la magnésie hydratée.

Les composés filmogènes suivant l'invention doivent être solubles ou émulsionnables dans une phase aqueuse et être capables de durcir après l'évaporation de celle-ci, en formant une phase solide qui à la température ambiante enrobe les grains. Comme composés filmogènes de ce genre on peut citer notamment, à titre d'exemples non limitatifs, des homopolymères ou copolymères vinyliques, tels que de l'alcool polyvinylique, du polyacétate de vinyle, un copolymère d'éthylène-acétate de vinyle, des homopolymères ou copolymères acryliques, tels que des esters alkyliques en C₁-C₁₈ d'acide acrylique ou d'acide méthacrylique, des paraffines, notamment des paraffines à chaînes courtes, des homopolymères ou copolymères de butadiène, d'isoprène et de styrène, des silicones ou des mélanges de ces composés. Un copolymère d'éthylène-acétate de vinyle s'est révélé particulièrement favorable comme composé filmogène suivant l'invention. On envisage en particulier des silicones ou du polyisoprène pour la réalisation de grains non seulement résistants mécaniquement, mais aussi relativement imperméables à l'eau.

Avantageusement, à l'état durci, ce composé filmogène forme autour des grains un film d'enrobage protecteur qui a une épaisseur inférieure à 100 µm.

Des détails et particularités du produit suivant l'invention sont indiqués également dans les revendications 1 à 6 qui suivent.

L'invention concerne également un procédé de traitement de produit à base d'oxyde de calcium sous forme de grains grossiers.

Suivant l'invention, ce procédé comprend
- une application en surface desdits grains obtenus, d'une solution ou émulsion dans une phase aqueuse d'au moins un composé filmogène, solide à température ambiante,
- une évaporation de la phase aqueuse, et
- un durcissement d'un film protecteur dudit au moins un composé filmogène, enrobant les grains.

Ce procédé est particulièrement simple, peu coûteux à effectuer, et il présente surtout l'avantage d'une consommation faible en milieu d'enrobage. On obtient avantageusement, après évaporation de la phase aqueuse, un film solide protecteur d'une épaisseur de seulement quelques dizaines de micromètres.

Suivant une forme préférée de réalisation de l'invention, le procédé comprend, lors de l'application susdite, une réaction exothermique entre une partie de la phase aqueuse et l'oxyde de calcium contenu dans les grains, une formation d'une mince couche de chaux hydratée en surface des grains, et une évaporation instantanée de la phase aqueuse restante provoquée par une augmentation de température résultant de ladite réaction exothermique, ce qui donne lieu à un durcissement rapide dudit film protecteur.

Suivant une forme avantageuse de réalisation, l'application est effectuée par pulvérisation, nébulisation ou atomisation de ladite solution ou émulsion. On peut ainsi pulvériser, nébuliser ou atomiser à la surface des grains la solution ou émulsion par exemple pendant leur transport sur une bande transporteuse, sur laquelle le produit doit passer, qu'il soit ou non traité suivant l'invention. On fait donc ainsi l'économie d'équipements lourds particuliers pour exécuter l'invention.

Des détails et particularités du procédé suivant l'invention sont aussi à prélever des revendications 7 à 10 qui suivent.

Le produit et le procédé suivant l'invention vont être à présent illustrés à l'aide d'exemples non limitatifs.

### Exemple 1

26 g d'une émulsion aqueuse de copolymère éthylène-acétate de vinyle, ayant une teneur en matière sèche de 38 %, sont pulvérisés sur 2 kg de chaux en roche de calibre 10/55 pour obtenir, après évaporation de l'eau à la suite de l'augmentation de température due à la légère hydratation de surface des grains, un gain de 3 % en poids de l'échantillon.

On a mesuré la résistance à l'attrition de la chaux en roche avant et après traitement selon le protocole suivant :

1 kg de chaux en roche, dont la fraction < 10 mm a été éliminée par tamisage, est mis en rotation dans un tambour cylindrique de 305 mm de diamètre et de 260 mm de longueur; le tambour tourne autour de son axe à raison de 55 tours / min.

A l'issue de ce test, c'est-à-dire après 275 rotations, on détermine le pourcentage de particules inférieures à 10 mm, soit 17,8 % pour la chaux en roche non enrobée et 6,8 % pour la chaux enrobée selon la méthode décrite ci-dessus. Ce traitement permet donc de réduire l'émission de poussières de 62 %.

### Exemple 2

24 g d'une émulsion aqueuse de paraffines à chaînes courtes avec un émulsifiant cationique, dont la teneur en matières sèches est comprise entre 35 et 38 % (Mobilcer 638 de Mobil + 20 % d'eau), sont pulvérisés sur 2 kg de chaux en roche de calibre 10/55. Ce traitement permet de réduire l'émission de poussières de 10,5 % par rapport à l'échantillon de chaux non traitée dans les conditions de l'essai d'attrition décrit à l'exemple 1.

### Exemple 3

24 g d'une émulsion aqueuse de paraffines, qui est obtenue en présence d'un agent tensioactif anionique et dont la teneur en matière sèche est comprise entre 35 et 38 %, (Mobilcer X de Mobil + 20 % d'eau), sont pulvérisés sur 2 kg de chaux en roche de calibre 10/55.

Ce traitement permet de réduire l'émission de poussières de 23,5 % par rapport à l'échantillon de chaux non traitée dans les conditions de l'essai d'attrition décrit à l'exemple 1.

### Exemple 4

36 g d'une émulsion aqueuse de copolymère d'éthylène-acétate de vinyle, dont la teneur en matière sèche est de 27,6 %, avec une charge minérale de 5 % en hydroxyde de calcium, sont pulvérisés sur 2 kg de chaux en roche de calibre 10/55.

Ce traitement permet de réduire l'émission de poussières de 61,4 % par rapport à l'échantillon de chaux non traitée dans les conditions de l'essai d'attrition décrit à l'exemple 1.

### Exemple 5

Des échantillons de chaux ont également été comparés sur la base d'un essai de chute.

Cet essai consiste à soumettre 5 kg de chaux en roche, dont les grains de taille inférieure à 10 mm ont été éliminés par tamisage, à 4 chutes successives d'une hauteur de 2 m, au travers d'un tube de 40 cm de diamètre, sur une surface métallique. A l'issue de ces 4 chutes, on détermine le pourcentage de fines inférieures à 10 mm.

Après les 4 chutes, on obtient respectivement 12,7 % de fines inférieures à 10 mm pour la chaux non traitée.

Lorsqu'on soumet à cet essai une chaux traitée conformément à l'exemple 1, on obtient en revanche uniquement 6,8 % de fines.

Ce traitement permet donc de réduire de 46,5 % le taux de fines inférieures à 10 mm provoquées par la fragmentation des grains au cours de leur chute dans les conditions de l'essai.

Il doit être entendu que la présente invention n'est en aucune façon limitée aux exemples et formes de réalisation donnés ci-dessus et que bien des modifications peuvent y être apportées sans sortir du cadre des revendications annexées.

On peut par exemple prévoir, comme composition pour enrober la chaux en roche, une solution aqueuse par exemple d'alcool polyvinylique.

## Revendications

1. Produit à base d'oxyde de calcium sous forme de grains grossiers, **caractérisé en ce qu'**il comporte un film protecteur enrobant les grains, à base d'au moins un composé filmogène, qui est solide à la température ambiante et qui, lors de l'application sur les grains, est en solution ou émulsion dans une phase aqueuse évaporable.

2. Produit suivant la revendication 1, **caractérisé en ce que** ladite phase aqueuse est de l'eau et **en ce que** le produit comporte en outre, en surface des grains, une mince couche de chaux hydratée qui est enrobée par ledit film protecteur durci.

3. Produit suivant l'une ou l'autre des revendications 1 et 2, **caractérisé en ce que** le composé filmogène, solide à la température ambiante, est choisi parmi le groupe constitué des homopolymères ou copolymères vinyliques, des homopolymères ou copolymères acryliques, des paraffines, des homopolymères ou copolymères du butadiène, de l'isoprène et du styrène, des silicones ou de leurs mélanges.

4. Produit suivant l'une quelconque des revendications 1 à 3, **caractérisé en ce qu'**il est formé à base d'au moins une substance répondant à la formule xCaO.(1-x)MgO, où x est égal ou inférieur à 1, mais supérieur à 0.

5. Produit suivant l'une quelconque des revendications 1 à 4, **caractérisé en ce qu'**il se présente sous la forme de grains ayant une taille d'au moins 10 mm.

6. Produit suivant l'une quelconque des revendications 1 à 5, **caractérisé en ce que** le film protecteur a une épaisseur inférieure à 100 µm.

7. Procédé de traitement de produit à base d'oxyde de calcium sous forme de grains grossiers, **caractérisé en ce qu'**il comprend
- une application, en surface desdits grains, d'une solution ou émulsion dans une phase aqueuse d'au moins un composé filmogène, solide à température ambiante,
- une évaporation de la phase aqueuse, et
- un durcissement d'un film protecteur dudit au moins un composé filmogène, enrobant les grains.

8. Procédé suivant la revendication 7, **caractérisé en ce que** le procédé comprend, lors de l'application susdite, une réaction exothermique entre une partie de la phase aqueuse et l'oxyde de calcium contenu dans les grains, une formation d'une mince couche de chaux hydratée en surface des grains, et une évaporation instantanée de la phase aqueuse restante provoquée par une augmentation de température résultant de ladite réaction exothermique, ce qui donne lieu à un durcissement rapide dudit film protecteur.

9. Procédé suivant l'une ou l'autre des revendications 7 et 8, **caractérisé en ce que** le procédé comprend, pendant et/ou après ladite application, un chauffage du produit pour évaporer la phase aqueuse.

10. Procédé suivant l'une quelconque des revendications 7 à 9, **caractérisé en ce que** l'application est effectuée par pulvérisation, nébulisation ou atomisation de ladite solution ou émulsion sur lesdits grains.

## Claims

1. A product based on calcium oxide in the form of coarse grains, **characterised in that** it comprises a protective film coating the grains, based on at least one film-forming compound, which is solid at room temperature and which, during application to the grains, is in solution or emulsion in a vaporisable aqueous phase.

2. A product according to Claim 1, **characterised in that** the said aqueous phase is water and **in that** the product also comprises, on the surface of the grains, a thin layer of hydrated lime which is coated with the said hardened protective film.

3. A product according to one or other of Claims 1 and 2, **characterised in that** the film-forming compound, solid at room temperature, is chosen from the group consisting of vinyl homopolymers or copolymers, acrylic homopolymers or copolymers, paraffins, homopolymers or copolymers of butadiene, isoprene and styrene, silicones and mixtures thereof.

4. A product according to any one of Claims 1 to 3, **characterised in that** it is formed on the basis of at least one substance complying with the formula xCaO.(1-x)MgO, where x is equal to or less than 1 but greater than 0.

5. A product according to any one of Claims 1 to 4, **characterised in that** it is in the form of grains with a size of at least 10 mm.

6. A product according to any one of Claims 1 to 5, **characterised in that** the protective film has a thickness of less than 100 µm.

7. A method of treating a product based on calcium oxide in the form of coarse grains, **characterised in that** it comprises
- an application, on the surface of the said grains, of a solution or emulsion in an aqueous phase of at least one film-forming compound, solid at room temperature,
- evaporation of the aqueous phase, and
- hardening of a protective film of the said at least one film-forming compound, coating the grains.

8. A method according to Claim 7, **characterised in that** the method comprises, during the above mentioned application, an exothermic reaction between some of the aqueous phase and the calcium oxide contained in the grains, formation of a thin layer of hydrated lime on the surface of the grains, and instantaneous evaporation of the remaining aqueous phase caused by an increase in temperature resulting from the said exothermic reaction, which gives rise to a rapid hardening of the said protective film.

9. A method according to one or other of Claims 7 and 8, **characterised in that** the method comprises, during and/or after the said application, a heating of the product in order to evaporate the aqueous phase.

10. A method according to any one of Claims 7 to 9, **characterised in that** the application is implemented by spraying, nebulisation or atomisation of the said solution or emulsion on the said grains.

## Patentansprüche

1. Produkt auf Calciumoxid-Basis in Form von groben Körnern, **dadurch gekennzeichnet, daß** es einen die Körner umschließenden Schutzfilm auf der Basis mindestens einer filmbildenden Verbindung umfaßt, die bei Raumstemperatur fest ist und die beim Aufbringen auf die Körner in Lösung oder Emulsion in einer verdampfbaren wäßrigen Phase vorliegt.

2. Produkt nach Anspruch 1, **dadurch gekennzeichnet, daß** die wäßrige Phase Wasser ist und daß das Produkt außerdem auf der Kornoberfläche eine dünne Schicht aus hydriertem Kalk umfaßt, die von dem gehärteten Schutzfilm umschlossen wird.

3. Produkt nach einem der Ansprüche 1 oder 2, **dadurch gekennzeichnet, daß** die filmbildende Verbindung, die bei Raumstemperatur fest ist, ausgewählt ist aus Vinyl-Homopolymeren oder -Copolymeren, Acryl-Homopolymeren oder -Copolymeren, Paraffinen, Butadien-, Isopren- und Styrol-Homopolymeren oder -Copolymeren, Siliconen oder Gemischen davon.

4. Produkt nach einem der Ansprüche 1 bis 3, **dadurch gekennzeichnet, daß** es auf der Basis mindestens einer Substanz der Formel xCaO:(1-x)MgO gebildet wird, wobei x gleich oder kleiner 1, aber größer als 0 ist.

5. Produkt nach einem der Ansprüche 1 bis 4, **dadurch gekennzeichnet, daß** es in Form von Körnern mit einer Größe von mindestens 10 mm vorliegt.

6. Produkt nach einem der Ansprüche 1 bis 5, **dadurch gekennzeichnet, daß** der Schutzfilm eine Dicke von weniger als 100 µm aufweist.

7. Verfahren zur Behandlung eines Produkts auf Calciumoxid-Basis in Form von groben Körnern, **dadurch gekennzeichnet, daß** es umfaßt:
das Aufbringen, auf die Oberfläche der Körner, einer Lösung oder Emulsion in einer wäßrigen Phase mindestens einer filmbildenden Verbindung, die bei Raumstemperatur fest ist,
das Verdampfen der wäßrigen Phase, und
Härten eines Schutzfilmes aus der mindestens einen filmbildenden Verbindung, der die Körner umschließt.

8. Verfahren nach Anspruch 7, **dadurch gekennzeichnet, daß** das Verfahren beim vorstehenden Aufbringen eine exotherme Reaktion zwischen einem Teil der wäßrigen Phase und dem in den Körnern enthaltenen Calciumoxid, eine Bildung einer dünnen Schicht aus hydriertem Kalk auf der Oberfläche der Körner, und ein unmittelbares Verdampfen der verbleibenden wäßrigen Phase, hervorgerufen durch einen Temperaturanstieg infolge der exothermen Reaktion, umfaßt, was eine schnelle Härtung des Schutzfilmes bewirkt.

9. Verfahren nach einem der Ansprüche 7 oder 8, **dadurch gekennzeichnet, daß** das Verfahren während und/oder nach dem Aufbringen ein Erwärmen des Produkts zum Verdampfen der wäßrigen Phase umfaßt.

10. Verfahren nach einem der Ansprüche 7 bis 9, **dadurch gekennzeichnet, daß** das Aufbringen durch Sprühen, Zerstäuben oder Feinstzerstäuben der Lösung oder Emulsion auf die Körner erfolgt.
